# DEMANDE DE BREVET EUROPEEN

(11) **EP 3 557 080 A1**
(43) Date de publication de la demande: **23.10.2019**
(21) Numéro de dépôt: 18168590.0
(22) Date de dépôt: 20.04.2018
(51) Int. Cl.: F04D 29/58, F04D 25/06, F04D 17/12, F04D 29/057

(54) **POMPE À CHALEUR COMPRENANT UN COMPRESSEUR DE FLUIDE**

(71) Demandeur: Belenos Clean Power Holding AG, 2502 Bienne (CH)
(72) Inventeur: Gashi, Rexhep, 1762 Givisiez (CH); Meyrat, Lucie, 2720 Tramelan (CH)
(74) Mandataire: ICB SA

(57) **Abrégé**

L'invention se rapporte à une pompe à chaleur (100) comprenant un compresseur de fluide (1) à deux étages comprenant un carter (2) présentant une entrée de fluide et une sortie de fluide comprimé et renfermant un arbre (7) monté en rotation autour d'un axe longitudinal, une première roue de compression et une seconde roue de compression montées dos à dos sur ledit arbre (7), ladite première roue de compression constituant un premier étage de compression et ladite seconde roue de compression constituant un second étage de compression, et un moteur positionné entre la première roue de compression et la seconde roue de compression et agencé pour mettre en rotation l'arbre (7). Le carter (2) comprend un logement intérieur (50) traversant s'étendant coxialement à l'axe longitudinal et dans lequel est disposé au moins le moteur, ledit logement intérieur (50) présentant une paroi intérieure (52) agencée pour former, avec le moteur, des canaux (54) entre au moins ladite paroi intérieure (52) et le moteur, lesdits canaux (54) s'étendant entre le premier étage de compression et le deuxième étage de compression, permettant au moteur d'être refroidi au contact du fluide à comprimer circulant dans les canaux (54). De plus, le carter (2) comprend à sa surface au moins une cavité (60a, 60b) formant au moins un logement intégré agencé pour recevoir au moins un composant électronique (4a, 4b) du compresseur, ledit logement intégré s'étendant en direction de la paroi intérieure (52) pour permettre audit composant électronique (4a, 4b) d'être refroidi par le fluide à comprimer circulant dans les canaux (54) par l'intermédiaire de la paroi intérieure (52).

## Description

### Domaine de l'invention

La présente invention se rapporte à une pompe à chaleur comprenant un compresseur de fluide à haute vitesse à deux étages comprenant un carter présentant une entrée de fluide et une sortie de fluide comprimé et renfermant un arbre monté en rotation autour d'un axe longitudinal, une première roue de compression et une seconde roue de compression montées dos à dos sur ledit arbre, ladite première roue de compression constituant un premier étage de compression et ladite seconde roue de compression constituant un second étage de compression, et un moteur, de préférence électrique synchrone, positionné entre la première roue de compression et la seconde roue de compression et agencé pour mettre en rotation l'arbre.

### Arrière-plan de l'invention

De tels compresseurs de fluide sont appelés généralement turbocompresseurs ou compresseurs centrifuges. Ils sont équipés d'un stator et d'un rotor formant un moteur synchrone à aimant permanent (moteur brushless). Les compresseurs de ce type peuvent atteindre de très hautes vitesses, par exemple de 100 000 à 500 000 tours/minute. Le moteur entraine les roues de compression à régime élevé, les roues de compression comprimant le fluide. Le fluide utilisé ici est un réfrigérant, notamment un gaz frigorigène. L'utilisation de deux roues de compression permet de comprimer le fluide deux fois plus.

Ces compresseurs comprennent généralement un premier circuit pour la circulation du fluide à comprimer et un second circuit pour la circulation d'un liquide de refroidissement utilisé pour refroidir le compresseur, et plus particulièrement le moteur et les paliers supportant l'arbre du moteur d'une part et les composants électroniques d'autre part. En effet, la rotation à vitesse élevée du moteur entraine un échauffement très important, de sorte que les éléments du compresseur doivent être refroidis pour ne pas être endommagés. Ces circuits sont généralement prévus à l'extérieur du compresseur en tant que tel, au moins en ce qui concerne le circuit de refroidissement.

De ce fait, ces compresseurs sont très encombrants et ne peuvent pas être intégrés dans un environnement restreint.

En outre, la chaleur récupérée par le liquide de refroidissement est perdue, ce qui constitue une perte d'énergie importante.

### Résumé de l'invention

L'invention a notamment pour objectif de pallier les différents inconvénients des pompes à chaleur comprenant un compresseur à haute vitesse connues.

Plus précisément, un objectif de l'invention est de fournir une pompe à chaleur comprenant un compresseur de fluide à haute vitesse à deux étages très compact.

Un autre objectif de l'invention est de fournir une pompe à chaleur comprenant un compresseur de fluide à haute vitesse à deux étages présentant un haut régime de rotation, un grand rapport de compression et un rendement énergétique optimum, tout en occupant un volume restreint.

A cet effet, la présente invention concerne une pompe à chaleur comprenant un compresseur de fluide à deux étages comprenant un carter présentant une entrée de fluide et une sortie de fluide comprimé et renfermant un arbre monté en rotation autour d'un axe longitudinal, une première roue de compression et une seconde roue de compression montées dos à dos sur ledit arbre, ladite première roue de compression constituant un premier étage de compression et ladite seconde roue de compression constituant un second étage de compression, et un moteur positionné entre la première roue de compression et la seconde roue de compression et agencé pour mettre en rotation l'arbre.

Selon l'invention, le carter comprend un logement intérieur traversant s'étendant coxialement à l'axe longitudinal et dans lequel est disposé au moins le moteur, ledit logement intérieur présentant une paroi intérieure agencée pour former, avec le moteur, des canaux entre au moins ladite paroi intérieure et le moteur, lesdits canaux s'étendant entre le premier étage de compression et le deuxième étage de compression, permettant au moteur d'être refroidi au contact du fluide à comprimer circulant dans les canaux. En outre, le carter comprend à sa surface au moins une cavité formant au moins un logement intégré agencé pour recevoir au moins un composant électronique du compresseur, ledit logement intégré s'étendant en direction de la paroi intérieure pour permettre audit composant électronique d'être refroidi par le fluide à comprimer circulant dans les canaux par l'intermédiaire de la paroi intérieure.

Ainsi, la pompe à chaleur selon l'invention comprend un compresseur qui utilise un seul et même fluide pour réaliser la compression et pour le refroidissement du compresseur. L'agencement des canaux utilisés à la fois pour la circulation du fluide à comprimer et pour le refroidissement des différents éléments du compresseur permet d'obtenir un compresseur très compact et donc une pompe à chaleur très compacte. En outre, la pompe à chaleur selon l'invention comprend un compresseur qui permet de récupérer toutes les pertes de chaleur au niveau du moteur, des paliers supportant l'arbre du moteur et de l'électronique, pour les transformer en travail utile. Ainsi, la pompe à chaleur selon l'invention comprend un compresseur qui présente un haut régime de rotation, un grand rapport de compression et un rendement énergétique optimum, tout en occupant un volume restreint.

### Brève description des dessins

Les buts, avantages et caractéristiques de la présente invention apparaîtront plus clairement dans la description détaillée suivante d'une forme de réalisation de l'invention donnée uniquement à titre d'exemple non limitatif et illustrée par les dessins annexés sur lesquels :
- la figure 1 représente une vue schématisée d'une pompe à chaleur selon l'invention comprenant un compresseur à haute vitesse vu en perspective,
- la figure 2 représente une vue éclatée du compresseur de la figure 1 selon l'axe longitudinal,
- la figure 3 représente une vue en perspective partiellement éclatée du compresseur de la figure 1 vu de dessus,
- la figure 4 est une vue en coupe longitudinale du compresseur de la figure 1,
- la figure 5 est une vue en coupe selon la ligne C-C de la figure 4,
- la figure 6 est une vue en perspective de l'arbre portant les roues de compression et le rotor,
- la figure 7 est une vue en coupe agrandie du compresseur au niveau des paliers, et
- la figure 8 est une vue en perspective de la platine portant les composants électroniques.

### Description détaillée de l'invention

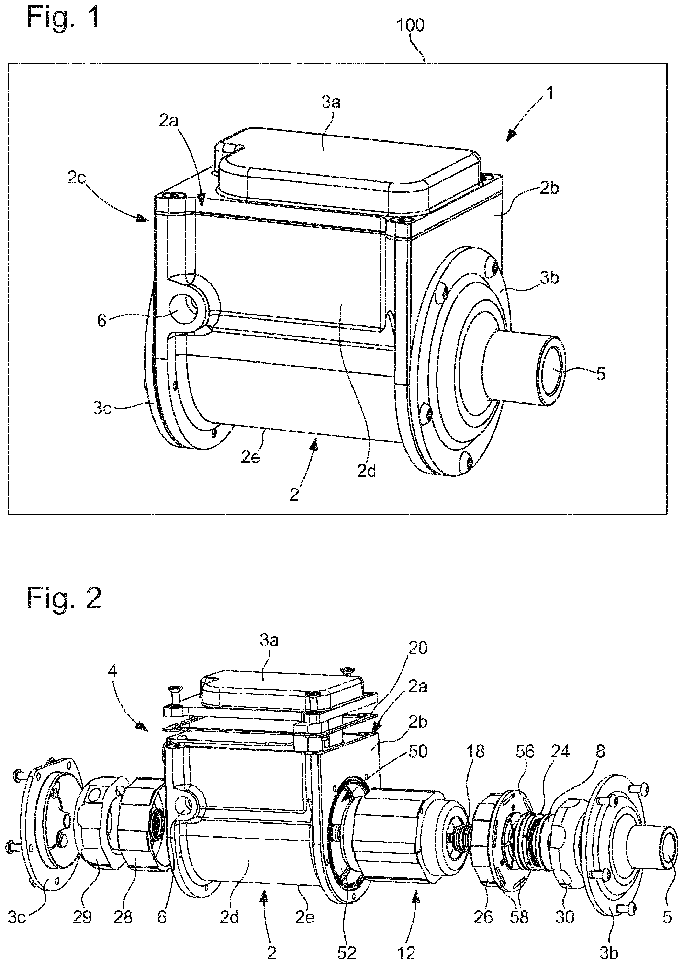

En référence à la figure 1, il est représenté schématiquement une pompe à chaleur 100 selon l'invention comprenant un compresseur de fluide 1 à haute vitesse à deux étages, du type turbocompresseur ou compresseur centrifuge. Cette pompe à chaleur peut être réversible et peut être utilisée dans un dispositif mobile ou pour un usage domestique. Dans la description qui suit, le terme « fluide » désigne un réfrigérant, et plus spécifiquement un gaz frigorigène. A l'exception du compresseur décrit ci-dessous, les éléments composant la pompe à chaleur sont connus en soi et ne nécessitent pas ici de description spécifique.

Le compresseur 1 comprend un carter 2, en aluminium, dont la face supérieure 2a est fermée par un couvercle supérieur 3a et les faces avant 2b et arrière 2c sont fermées respectivement par un couvercle avant 3b et par un couvercle arrière 3c. Les faces latérales 2d du carter sont réunies à leur base pour former un fond 2e présentant, en section transversale, une forme en U.

Le couvercle supérieur 3a est positionné du côté des composants électroniques 4 du compresseur, comme on le verra ci-après. Ainsi, l'accès aux composants électroniques 4 intégrés dans le compresseur comme on le verra ci-après, est facile, l'accès se faisant par le couvercle supérieur 3a. Les couvercles avant et arrière 3b, 3c servent à atteindre l'intérieur du compresseur (moteur, rotor, paliers, etc.). Un joint d'étanchéité 20 est intercalé entre la face supérieure 2a du carter 2 et le couvercle supérieur 3a. Ce joint 20 permet de protéger les composants électroniques 4 contre la poussière et l'humidité.

Le carter 2 présente une entrée de fluide à comprimer 5 prévue sur le couvercle avant 3b et une sortie tangentielle de fluide comprimé 6 prévue sur l'une des faces latérales 2d du carter 2.

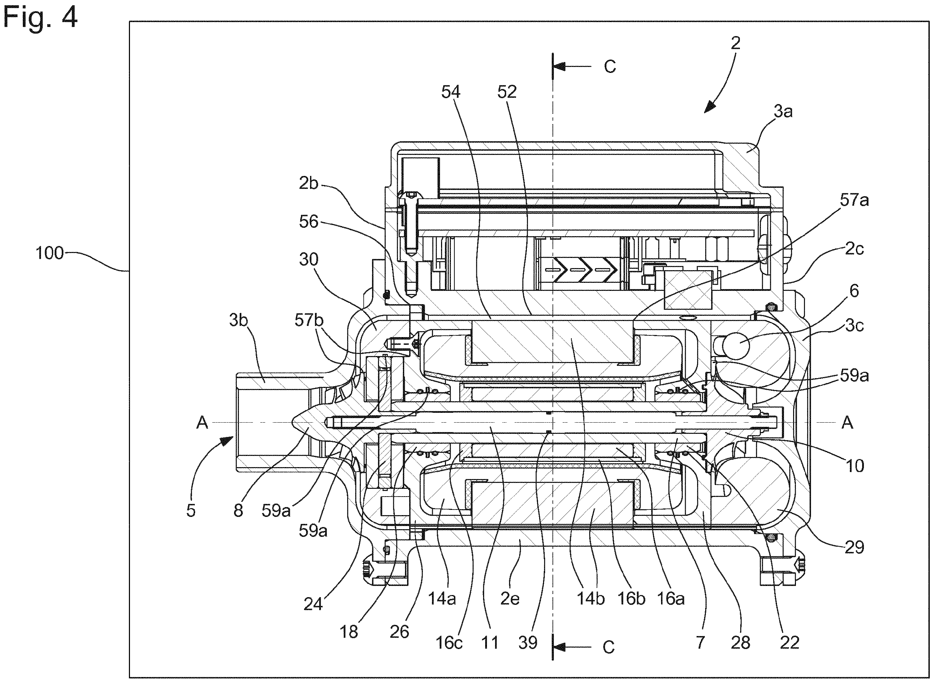

En référence à la figure 4, le carter 2 renferme un arbre 7 en céramique, monté en rotation autour d'un axe longitudinal AA traversant les faces avant 2b et arrière 2c, une première roue de compression centrifuge 8 et une seconde roue de compression centrifuge 10 montées dos à dos à chaque extrémité de l'arbre 7, ladite première roue de compression 8 constituant un premier étage de compression et ladite seconde roue de compression 10 constituant un second étage de compression. Plus particulièrement, l'arbre 7 est creux et renferme une tige filetée 11, à chaque extrémité de laquelle est vissée l'une des roues de compression 8, 10, ce qui permet un montage et un démontage aisés des roues de compression. Ainsi, les deux roues de compressions 8 et 10 sont entrainées sur le même arbre 7, ce qui permet d'avoir un meilleur rendement énergétique et d'éviter un réducteur. L'arrière des roues de compression 8 et 10 comporte un joint labyrinthe afin de maitriser les pressions dans le compresseur et équilibrer les forces axiales.

Le carter 2 renferme également un moteur électrique synchrone 12 positionné entre la première roue de compression 8 et la seconde roue de compression 10 et agencé pour mettre en rotation l'arbre 7. Le moteur 12 comprend un stator 14 et un rotor qui interagissent pour former un moteur électrique synchrone à aimant permanent (moteur brushless). Plus particulièrement, le stator 14 est formé par une bobine 14a et deux éléments en ferrite 14b, montés fixes par rapport au carter 2. Le rotor comprend un aimant 16a rendu solidaire de l'arbre 7, par exemple par collage, et est recouvert d'un chemisage 16b en fibre de carbone. Des flasques en titane 16c sont fixés (par exemple par collage) aux extrémités latérales et permettent d'assurer la résistance du rotor aux forces centrifuges lors de grandes vitesses.

L'arbre 7 est monté en rotation sur le carter 2 autour de son axe longitudinal AA au moyen d'au moins un palier radial avant 18, un palier radial arrière 22 et un palier axial 24. Le compresseur comprend un support de palier radial avant 26 pour porter le palier radial avant 18, un support de palier radial arrière 28 pour porter le palier radial arrière 22, agencés pour se positionner autour de l'arbre 7, respectivement à l'avant et à l'arrière du moteur 16. A l'arrière, il est également prévu une volute 29 entre le support de palier radial arrière 28 et le couvercle arrière 3c. La volute 29 comprend l'orifice menant à la sortie tangentielle 6 de fluide, après compression. Il est également prévu un support de palier axial 30 pour porter le palier axial 24 agencé pour se positionner autour de l'arbre 7, entre la première roue de compression 8 et le support de palier radial avant 26. Il est bien évident que le palier axial pourrait être prévu à l'arrière du moteur.

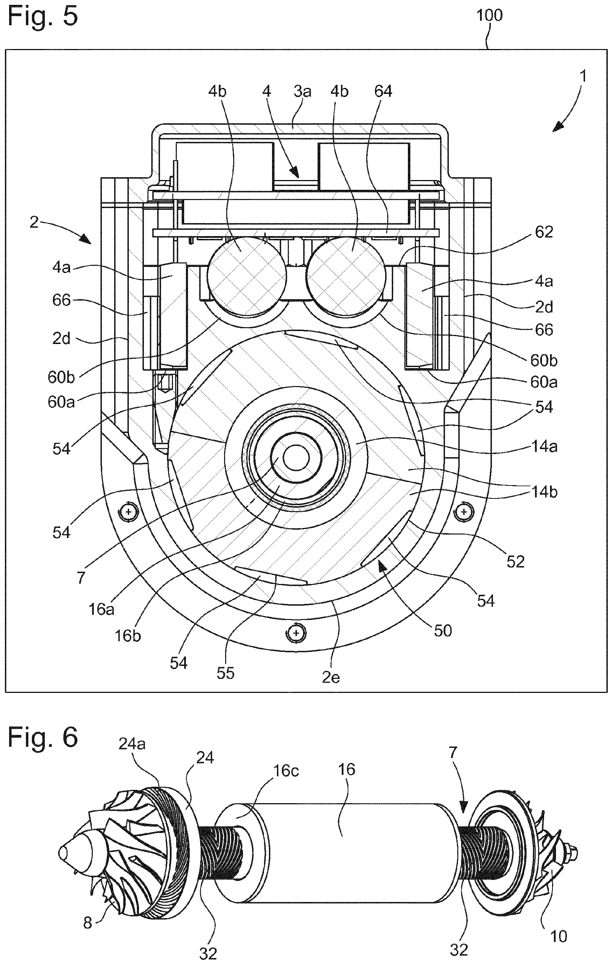

Les paliers sont sans contact, de type aérodynamiques, afin d'engendrer peu de frottement. Ils ne nécessitent pas de lubrification et demandent très peu de maintenance. Plus particulièrement, en référence à la figure 6, le palier axial 24 est un palier aérodynamique et est constitué par un disque comportant sur au moins l'une de ses faces des premières rainures 24a, de préférence en spiral, agencées pour créer un film d'air. Les paliers radiaux avant 18 et arrière 22 sont des paliers aérodynamiques, et l'arbre 7 présente en regard des paliers radiaux avant 18 et arrière 22 des secondes rainures 32 agencées pour créer un film d'air.

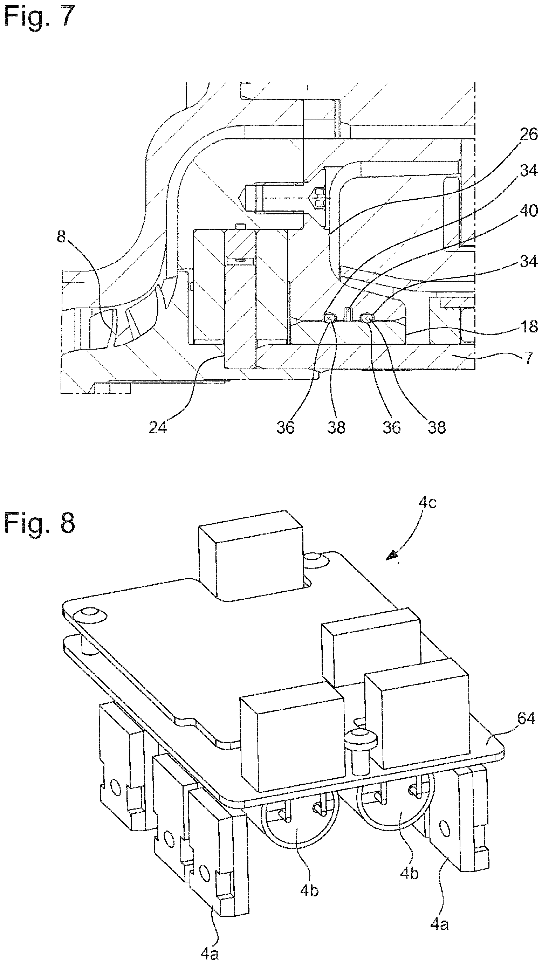

En référence à la figure 7, le support de palier radial avant 26 comprend au moins une première gorge 34 positionnée en regard d'une deuxième gorge 36 prévue sur le palier radial avant 18, ladite première gorge 34 et ladite deuxième gorge 36 étant agencées pour recevoir un joint torique de palier avant 38. Sur la figure 7, deux jeux de gorges 34, 36 sont prévus. De même, le support de palier radial arrière 28 comprend au moins une troisième gorge positionnée en regard d'une quatrième gorge prévue sur le palier radial arrière 22, ladite troisième gorge et ladite quatrième gorge étant agencées pour recevoir un joint torique de palier arrière. Les gorges prévues sur le palier radial avant 18 et sur le palier radial arrière 22 ont le fond arrondi. Le maintien axial et radial des paliers radiaux 18, 22 est réalisé uniquement respectivement par lesdits joints toriques. Ceux-ci permettent d'assurer le centrage des paliers radiaux 18, 22, de compenser les jeux radiaux, d'amortir les vibrations et de maintenir leur position axiale. En outre, ce montage permet un gain de place, permettant d'accroitre encore la compacité du compresseur.

Le maintien radial et le centrage de la tige filetée 11 portant les deux roues de compression 8 et 10 au centre de l'arbre 7 sont réalisés au moyen d'un joint 39 (cf. Figure 4) monté dans une gorge prévue sur la tige filetée 11.

En outre, le support de palier radial avant 26 comprend une cinquième gorge 40 prévue pour le passage d'air. De même, le support de palier radial arrière 28 comprend une sixième gorge prévue pour le passage d'air. Ces cinquième et sixième gorges, ainsi que des perçages communiquant entre chaque point important des paliers, permettent l'équilibrage de la pression dans tout le compresseur, et notamment entre les joints. Cela permet d'éviter de déloger les joints.

En référence aux figures 2, 4 et 5, le carter 2 comprend un logement intérieur traversant 50 s'étendant coxialement à l'axe longitudinal AA entre la face avant 2b et la face arrière 2c du carter 2 et recevant le support de palier radial avant 26 et le palier radial avant 18, le moteur 12 et son arbre 7, le support de palier radial arrière 28 et le palier radial arrière 22, la seconde roue de compression 10 et la volute 29. Du côté de la face avant 2b, le logement intérieur 50 est fermé par le couvercle avant 3b qui intègre la première roue de compression 8, le support de palier axial 30 et le palier axial 24. Du côté de la face arrière 2c, le logement intérieur 50 est fermé par le couvercle arrière 3c.

Le logement intérieur 50 présente une paroi intérieure 52 agencée pour former, avec le moteur 12, des canaux 54 entre au moins ladite paroi intérieure 52 et le moteur 12, lesdits canaux 54 s'étendant entre le premier étage de compression et le deuxième étage de compression, permettant au moteur 12 d'être refroidi au contact du fluide à comprimer circulant dans les canaux 54. Plus spécifiquement, dans la variante représentée ici, la paroi intérieure 52 du logement intérieur 50 présente une section transversale circulaire et les deux éléments en ferrite 14b du stator 14 du moteur 12 présentent, sur leurs faces extérieures, des creusures longitudinales 55 (cf. figure 5), s'étendant en suivant l'axe longitudinal AA, conférant au moteur une section transversale sensiblement polygonale (ici dodécagonale), de sorte que les creusures 55 ou les faces des éléments en ferrite 14b du moteur 12 qui ne sont pas en contact avec la paroi intérieure 52 forment avec ladite paroi intérieure 52 lesdits canaux 54 pour la circulation du fluide à comprimer.

Plus généralement, toutes les pièces du compresseur situées le long de l'axe longitudinal entre le premier étage de compression et le deuxième étage de compression sont dimensionnées et agencées pour former lesdits canaux 54 de circulation du fluide à comprimer s'étendant entre le premier étage de compression et le deuxième étage de compression. Ainsi, des canaux 54 sont formés entre le couvercle avant 3b et le support de palier axial 30, entre le support de palier radial avant 26 et la paroi intérieure 52 (à cet effet, l'épaulement 56 du support de palier radial avant 26 en appui sur l'entrée du logement 50 présente des fentes 58 prévues en correspondance des canaux 54 pour la circulation du fluide à comprimer), entre les éléments en ferrite 14b du moteur 12 et la paroi intérieure 52 comme décrit ci-dessus, entre le support de palier radial arrière 28 et la paroi intérieure 52, entre la volute 29 et la paroi intérieure 52 et entre le couvercle arrière 3c et la volute 29. Ces canaux 54 sont conçus pour éviter des turbulences dans le compresseur.

En outre, il est prévu avantageusement au moins un orifice (par exemple le point référencé 57a sur la figure 4) agencé pour permettre au fluide à comprimer circulant dans les canaux 54 d'entrer dans le moteur 12 et de circuler entre le stator 14 et le rotor 16 et au moins un orifice (par exemple les points référencés 57b sur la figure 4) agencé pour permettre au fluide à comprimer de sortir du moteur 12 et de rejoindre lesdits canaux 54 après avoir refroidi le moteur 12.

De même, il est prévu avantageusement au moins un orifice (par exemple les points référencés 59a sur la figure 4) agencé pour permettre au fluide à comprimer circulant dans les canaux 54 de circuler à proximité des paliers axial 24, radial avant 18 et radial arrière 22, et au moins un orifice (correspondant par exemple aux mêmes points référencés 57b sur la figure 4) agencé pour permettre au fluide à comprimer de rejoindre lesdits canaux 54 après avoir refroidi lesdits paliers axial 24, radial avant 18 et radial arrière 22.

Ainsi, après être entré dans le premier étage de compression par l'entrée 5, le fluide à comprimer passe dans les canaux 54 à travers les pièces du compresseur situées le long de l'axe longitudinal entre le premier étage de compression et le deuxième étage de compression pour rejoindre le second étage de compression. De ce fait, le fluide à comprimer, lorsqu'il passe entre la paroi intérieure 52 et les éléments en ferrite 14b du moteur, refroidit ce dernier et récupère les calories perdues du moteur afin d'augmenter son efficacité avant d'entrer dans le second étage de compression. De plus, les orifices 57a, 57b, 59a permettent de réaliser une légère déviation du flux afin que le fluide à comprimer circule également entre le stator 14 et le rotor 16 et dans les paliers pour refroidir ces éléments et récupérer les pertes de chaleur au niveau du moteur et les pertes de chaleur dues aux frottements dans les paliers.

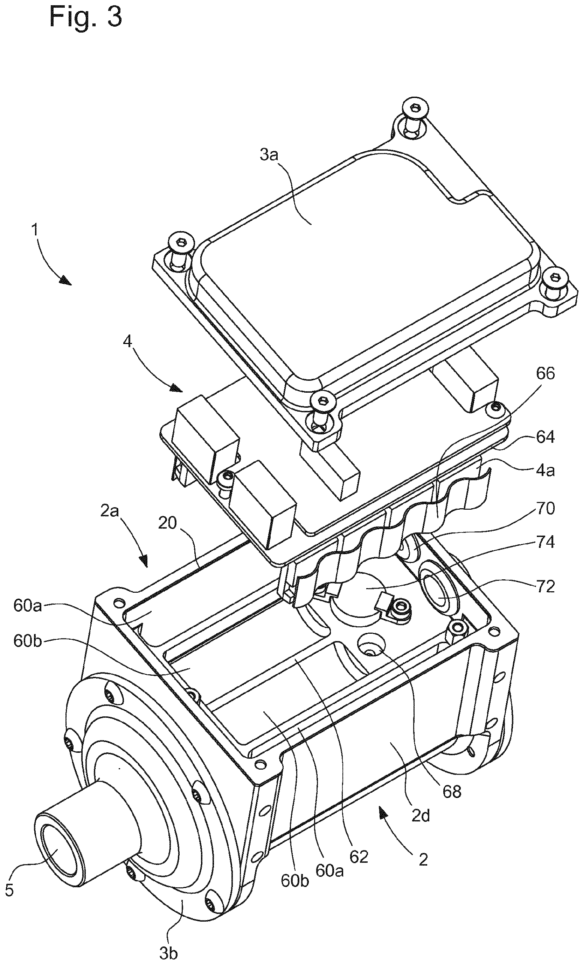

De plus, en référence aux figures 3 et 5, le carter 2 comprend à sa surface au moins une cavité 60a, 60b formant au moins un logement intégré agencé pour recevoir au moins un composant électronique du compresseur, ledit logement intégré s'étendant en direction de la paroi intérieure 52, au plus près des canaux 54, pour permettre audit composant électronique d'être refroidi par le fluide à comprimer circulant dans les canaux 54 par l'intermédiaire de la paroi intérieure 52, elle-même étant au contact du fluide à comprimer circulant dans les canaux 54.

D'une manière avantageuse, le carter 2 comprend, sur une même surface définissant sa face intérieure supérieure 62, plusieurs cavités 60a, 60b formant chacune un logement intégré agencé pour recevoir un composant électronique du compresseur, lesdites cavités 60a, 60b étant prévues au moins au-dessus et au moins d'un côté, et de préférence de chaque côté, de la paroi intérieure 52 du logement intérieur 50 du carter 2. Ainsi, les logements intégrés et donc les composants électroniques placés dans ces logements intégrés sont disposés au plus près du fluide à comprimer qui circule dans les canaux 54 au contact de la paroi intérieure 52, de sorte que ledit fluide à comprimer peut récupérer la chaleur émise par lesdits composants électroniques par l'intermédiaire de ladite paroi intérieure 52.

De préférence, au moins l'une des cavités 60a, 60b s'étend longitudinalement au moins partiellement le long des canaux de circulation 54 du fluide à comprimer pour former un logement intégré s'étendant longitudinalement sur au moins une partie de la face intérieure supérieure 62 du carter 2. Ainsi, les logements intégrés suivent les canaux 54 de manière à obtenir une zone d'échange de chaleur maximale entre les composants électroniques disposés dans les logements intégrés et le fluide à comprimer, par l'intermédiaire de ladite paroi intérieure 52.

D'une manière avantageuse, et en référence à la figure 8, le compresseur comprend au moins une platine 64 agencée pour recevoir les composants électroniques 4 du compresseur, ladite platine 64 portant sur sa face inférieure au moins des composants électroniques 4a, 4b s'étendant longitudinalement, selon l'axe longitudinal AA, ladite platine 64 étant positionnée au-dessus de la face intérieure supérieure 62 du carter 2 de manière à ce que lesdits composants électroniques 4a, 4b s'étendant longitudinalement sur la face inférieure de la platine 64 se logent respectivement dans leurs logements intégrés s'étendant longitudinalement au moins partiellement le long des canaux de circulation 54 du fluide à comprimer. Sur la face supérieure de la platine 64 sont prévus d'autres composants électroniques 4c agencés de manière à se loger dans le couvercle supérieur 3a.

Par exemple, les composants électroniques 4a sont des transistors qui sont disposés longitudinalement de chaque côté de la platine, et verticalement à la platine 64 afin d'avoir le plus de surface de contact possible avec le carter et d'être le plus proche possible du fluide à comprimer par l'intermédiaire de la paroi intérieure 52 de chaque côté du moteur 12. Il est bien évident que, s'il y a suffisamment de place pour cela, les transistors peuvent être tous disposés d'un seul et même côté du moteur.

En outre, les logements intégrés, et notamment les logements intégrés qui s'étendent longitudinalement au moins partiellement le long des canaux 54 de circulation du fluide à comprimer, peuvent comprendre une lame ressort 66, disposée de préférence longitudinalement, et agencée pour maintenir le composant électronique 4a disposé dans ledit logement intégré en appui contre la paroi du logement intégré en direction de la paroi interne 52.

Les composants électroniques 4b sont par exemple des condensateurs sous forme de tube de section transversale circulaire et sont disposés longitudinalement sur la face inférieure de la platine 64 de manière à venir se loger dans des cavités 60b au fond arrondi correspondant prévues au-dessus du moteur 12 afin d'avoir le plus de surface de contact possible avec le carter et d'être le plus proche possible du fluide à comprimer par l'intermédiaire de la paroi intérieure 52 au-dessus du moteur 12. Il est possible de prévoir au fond de la cavité 60b de la pâte thermique permettant un meilleur contact entre le condensateur et le carter 2.

Ainsi, le fluide à comprimer qui circule dans les canaux 54 récupère également les pertes de chaleur des composants électroniques du compresseur, ceux-ci étant disposés au plus près dudit fluide à comprimer. De plus, l'intérieur du compresseur est optimisé, et notamment la surface supérieure du carter est découpée de manière à accueillir les composants électroniques du compresseur dans un volume restreint permettant de réaliser un compresseur très compact.

Avantageusement, la face intérieure supérieure 62 du carter 2 présente un perçage 68 agencé pour permettre le passage de câbles entre le moteur 12 et les composants électroniques 4, ledit perçage 68 étant étanche pour ne pas avoir de fuite de fluide à comprimer. A cet effet, on coule de la résine dans le perçage 68 en introduisant des éléments de câble dans la résine pendant le coulage. Les autres éléments de câble liés respectivement au moteur 12 et aux composants électroniques 4 sont ensuite soudés aux éléments de câble coulés dans la résine dans le perçage 68. D'autres passages de câbles étanches 70 et 72 sont prévus sur la face arrière 2c du carter 2 par exemple pour la sortie du câble de commande et pour la sortie du câble de puissance, ce qui permet une connexion en toute sécurité.

De préférence, le compresseur comprend un capteur 74 de pression et de température entre les deux étages de compression, permettant une autorégulation du compresseur.

Le compresseur de fluide utilisé dans l'invention permet d'atteindre des vitesses de rotation très élevées, comprises entre 100 000 tr/min et 500 000 tr/min. Il permet au fluide comprimé dans le premier étage de compression de passer sensiblement dans tout le système pour récupérer toute la chaleur perdue, et notamment la chaleur perdue au niveau du moteur, des paliers et des composants électroniques, afin d'augmenter son efficacité avant d'entrer dans le second étage de compression (la température du fluide à comprimer augmentant, sa pression augmente également). En outre, l'utilisation du seul fluide à comprimer pour refroidir le compresseur, sans l'aide d'un circuit de refroidissement additionnel, ainsi que l'agencement des composants électroniques dans le compresseur pour avoir une électronique intégrée au carter, permettent d'obtenir un compresseur très compact. La pompe à chaleur selon l'invention comprenant le compresseur décrit ci-dessus présente donc un haut régime de rotation et un grand rapport de compression tout en occupant un volume restreint. Par exemple, un compresseur utilisé dans l'invention présente un rapport de compression supérieur à 3, et une puissance de l'ordre de 4 kW pour des dimensions L x l x h en cm de l'ordre de 14 x 8 x 11 pour un poids de 1,5 kg seulement.

## Revendications

1. Pompe à chaleur (100) comprenant un compresseur de fluide (1) à deux étages comprenant un carter (2) présentant une entrée de fluide (5) et une sortie (6) de fluide comprimé et renfermant un arbre (7) monté en rotation autour d'un axe longitudinal (AA), une première roue de compression (8) et une seconde roue de compression (10) montées dos à dos sur ledit arbre (7), ladite première roue de compression (8) constituant un premier étage de compression et ladite seconde roue de compression (10) constituant un second étage de compression, et un moteur (12) positionné entre la première roue de compression (8) et la seconde roue de compression (10) et agencé pour mettre en rotation l'arbre (7), **caractérisée en ce que** le carter (2) comprend un logement intérieur (50) traversant s'étendant coxialement à l'axe longitudinal (AA) et dans lequel est disposé au moins le moteur (12), ledit logement intérieur (50) présentant une paroi intérieure (52) agencée pour former, avec le moteur (12), des canaux (54) entre au moins ladite paroi intérieure (52) et le moteur (12), lesdits canaux (54) s'étendant entre le premier étage de compression et le deuxième étage de compression, permettant au moteur (12) d'être refroidi au contact du fluide à comprimer circulant dans les canaux (54), et **en ce que** le carter (2) comprend à sa surface au moins une cavité (60a, 60b) formant au moins un logement intégré agencé pour recevoir au moins un composant électronique (4) du compresseur, ledit logement intégré s'étendant en direction de la paroi intérieure (52) pour permettre audit composant électronique (4) d'être refroidi par le fluide à comprimer circulant dans les canaux (54) par l'intermédiaire de la paroi intérieure (52).

2. Pompe à chaleur selon la revendication 1, **caractérisée en ce que** la paroi intérieure (52) du logement intérieur (50) du carter (2) présente une section transversale circulaire et **en ce que** le moteur (12) présente sur sa face extérieure des creusures (55), lesdites creusures (55) formant avec ladite paroi intérieure (52) lesdits canaux (54) pour la circulation du fluide à comprimer.

3. Pompe à chaleur selon l'une des revendications précédentes, **caractérisée en ce que** le carter (2) comprend, sur une même surface définissant sa face intérieure supérieure (62), plusieurs cavités (60a, 60b) formant chacune un logement intégré agencé pour recevoir un composant électronique (4a, 4b) du compresseur, lesdites cavités (60a, 60b) étant prévues au moins au-dessus et au moins d'un côté de la paroi intérieure (52) du carter (2).

4. Pompe à chaleur selon l'une des revendications précédentes, **caractérisée en ce que** la cavité (60a, 60b) s'étend longitudinalement au moins partiellement le long des canaux (54) de circulation du fluide à comprimer pour former un logement intégré s'étendant longitudinalement.

5. Pompe à chaleur selon la revendication précédente, **caractérisée en ce que** le compresseur de fluide (1) comprend au moins une platine (64) agencée pour recevoir les composants électroniques (4) du compresseur, ladite platine (64) portant sur sa face inférieure au moins des composants électroniques (4a, 4b) s'étendant longitudinalement, ladite platine (64) étant positionnée au-dessus de la face intérieure supérieure (62) du carter (2) de manière à ce que lesdits composants électroniques (4a, 4b) s'étendant longitudinalement sur la face inférieure de la platine (64) se logent respectivement dans leurs logements intégrés s'étendant longitudinalement au moins partiellement le long des canaux (54) de circulation du fluide à comprimer.

6. Pompe à chaleur selon l'une des revendications précédentes, **caractérisée en ce que** le logement intégré comprend une lame ressort (66) agencée pour maintenir le composant électronique (4a) disposé dans ledit logement intégré en appui contre la paroi du logement intégré en direction de la paroi interne (52).

7. Pompe à chaleur selon l'une des revendications précédentes, **caractérisée en ce que** compresseur de fluide (1) comprend un couvercle supérieur (3a) pour fermer la face supérieure (2a) du carter (2), ledit couvercle supérieur (3a) étant positionné du côté des composants électroniques (4).

8. Pompe à chaleur selon l'une des revendications précédentes, **caractérisée en ce que** le moteur (12) comprend un stator (14) et un rotor (16) et **en ce qu'**il est prévu au moins un orifice (57a) agencé pour permettre au fluide à comprimer circulant dans les canaux (54) d'entrer dans le moteur (12) et de circuler entre le stator (14) et le rotor (16) et au moins un orifice (57b) agencé pour permettre au fluide à comprimer de sortir du moteur (12) et de rejoindre lesdits canaux (54) après avoir refroidi le moteur (12).

9. Pompe à chaleur selon l'une des revendications précédentes, **caractérisée en ce que** l'arbre (7) est monté en rotation sur le carter (2) au moyen d'au moins un palier radial avant (18), un palier radial arrière (22) et un palier axial (24).

10. Pompe à chaleur selon la revendication 9, **caractérisée en ce qu'**il est prévu au moins un orifice (59a) agencé pour permettre au fluide à comprimer circulant dans les canaux (54) de circuler à proximité respectivement du palier radial avant (18), du palier radial arrière (22) et du palier axial (24), et au moins un orifice (57b) agencé pour permettre au fluide à comprimer de rejoindre lesdits canaux (54) après avoir refroidi lesdits palier radial avant (18), palier radial arrière (22) et palier axial (24).

11. Pompe à chaleur selon l'une des revendications 9 et 10, **caractérisée en ce que** le palier axial (24) est un palier aérodynamique et **en ce qu'**il présente sur au moins l'une de ses faces des premières rainures (24a) agencées pour créer un film d'air.

12. Pompe à chaleur selon l'une des revendications 9 et 10, **caractérisée en ce que** le palier radial avant (18) et le palier radial arrière (22) sont des paliers aérodynamiques et **en ce que** l'arbre (7) présente en regard du palier radial avant (18) et du palier radial arrière (22) des secondes rainures (32) agencées pour créer un film d'air.

13. Pompe à chaleur selon l'une des revendications 9 à 12, **caractérisée en ce que** le compresseur de fluide (1) comprend un support de palier radial avant (26) et un support de palier radial arrière (28), agencés pour se positionner autour de l'arbre (7), respectivement à l'avant et à l'arrière du moteur (12), **en ce que** ledit support de palier radial avant (26) comprend au moins une première gorge (34) positionnée en regard d'une deuxième gorge (36) prévue sur le palier radial avant (18), ladite première gorge (34) et ladite deuxième gorge (36) étant agencées pour recevoir un joint de palier avant (38), et **en ce que** ledit support de palier radial arrière (28) comprend au moins une troisième gorge positionnée en regard d'une quatrième gorge prévue sur le palier radial arrière (22), ladite troisième gorge et ladite quatrième gorge étant agencées pour recevoir un joint de palier arrière.

14. Pompe à chaleur selon la revendication 13, **caractérisée en ce que** le support de palier radial avant (26) comprend une cinquième gorge (40) prévue pour le passage d'air et **en ce que** le support de palier radial arrière (28) comprend une sixième gorge prévue pour le passage d'air.

15. Pompe à chaleur selon l'une des revendications précédentes, **caractérisée en ce que** le carter (2) présente un perçage (68) agencé pour permettre le passage de câbles entre le moteur (12) et les composants électroniques (4), ledit perçage (68) étant étanche.
